# EUROPEAN PATENT APPLICATION

(11) **EP 4 769 305 A1**
(43) Date of publication of application: **01.07.2026**
(21) Application number: 25210042.5
(22) Date of filing: 21.10.2025
(51) Int. Cl.: G06T 7/174, B25J 9/16, G06T 7/33, G06T 7/70, G06T 7/521, G06T 7/60

(54) **METHODS FOR OBTAINING WORKPIECE PROCESSING PATH, ROBOT, AND STORAGE MEDIUM**

(30) Priority: 27.12.2024 CN 202411948462
(71) Applicant: Shen Zhen Qian Hai Rui Ji Technology Co., Ltd., Shenzhen, Guangdong 518100 (CN); CIMC Containers (Group) Co., Ltd., Dongguan Guangdong 523808 (CN); China International Marine Containers (Group) Ltd., Shenzhen, Guangdong 518067 (CN)
(72) Inventor: XU, Xi, Shenzhen, 518100 (CN); ZHANG, Zhaobiao, Shenzhen, 518100 (CN); GAO, Jianwen, Shenzhen, 518100 (CN)
(74) Representative: Gleiss Große Schrell und Partner mbB

(57) **Abstract**

A method includes: collecting data of the workpiece to obtain a target workpiece point cloud; taking a data point in the target workpiece point cloud whose curvature is greater than a curvature threshold as an initial path point; calculating a target feature of the initial path point based on a normal vector of each initial path point, and if the target feature of the initial path point meets a set condition, taking the initial path point as a target path point; extracting a skeleton line from at least one path point cloud aggregated by target path points; performing linear fitting on the skeleton line to obtain the processing path of the workpiece.

## Description

### TECHNICAL FIELD

The technical field of the present application is the workpiece processing field, specifically relating to a method for obtaining a workpiece processing path, a robot, and a storage medium.

### BACKGROUND

In the field of workpiece processing, for the processing of workpieces or the processing of the joints of workpieces, and the segmentation of workpieces, it is necessary to determine the processing position of the workpiece in advance, and then the corresponding processing path is generated, and then finally the processing is performed according to the processing path in a preset processing mode.

At present, the acquisition of the processing path on the workpiece is determined by the combination of manual operation and machine operation. Workers drive the data collection device of the machine to measure the processing position of the workpiece, to obtain the coordinate information of the processing position, and to generate the processing path. However, this working mode is particularly dependent on the workers' work experience and their operating experience with the machine, such that the acquisition of the processing path is extremely cumbersome and has poor accuracy, resulting in that when processing the workpiece, the workers also need to observe it nearby to avoid errors, which not only greatly wastes valuable human resources, and but also greatly reduces the efficiency of obtaining the processing path, and ultimately leads to the inability to complete the workpiece processing efficiently.

Therefore, how to obtain the processing path of the workpiece efficiently and conveniently is a technical problem that urgently needs to be solved at present.

### SUMMARY

There are provided a method for obtaining a workpiece processing path, a robot, and a storage medium according to embodiments of the present application. The technical solution is as below.

According to a first aspect of embodiments of the present application, there is provided a method for obtaining a workpiece processing path, and the method includes:
collecting data of the workpiece to obtain a target workpiece point cloud;
taking a data point in the target workpiece point cloud whose curvature is greater than a curvature threshold as an initial path point;
calculating a target feature of the initial path point based on a normal vector of each initial path point, and if the target feature of the initial path point meets a set condition, taking the initial path point as a target path point;
extracting a skeleton line from at least one path point cloud aggregated by target path points; and
performing linear fitting on the skeleton line to obtain the processing path of the workpiece.

According to a second aspect of embodiments of the present application, there is provided a robot, including a memory, a processor and a readable program stored on the memory, the processor executes the readable program to implement the method described in any one of the above items.

According to a third aspect of embodiments of the present application, there is provided a readable storage medium, a readable program/instructions are stored thereon, and when the readable program/instructions are executed by a processor, the method described in any one of the above items.

According to a fourth aspect of embodiments of the present application, there is provided a program product, including readable program/instructions, when the readable program/instructions are executed by a processor, the method described in any one of the above items is implemented.

Other features and advantages of the present application will become apparent through the following detailed description, or be partially acquired through the practice of the present application.

It should be understood that the above general description and the following detailed description are merely exemplary and explanatory, and cannot limit the present application.

### BRIEF DESCRIPTION OF THE DRAWINGS

The above and other objectives, features and advantages of the present application will become more obvious by describing its exemplary embodiments in detail with reference to the accompanying drawings.
FIG. 1 shows a schematic diagram of a robot processing a workpiece according to an embodiment of the present application.
FIG. 2 shows a flowchart of a method for obtaining a workpiece processing path according to an embodiment of the present application.
FIG. 3 shows a flowchart of collecting data of the workpiece to obtain the target workpiece point cloud according to an embodiment of the present application.
FIG. 4 shows a schematic diagram of the direction of the normal vector according to an embodiment of the present application.
FIG. 5 shows a flowchart of determining the target path points from the initial path points according to the normal vectors of the initial path points according to an embodiment of the present application.
FIG. 6 shows a flowchart of extracting the skeleton line from at least one path point cloud aggregated by the target path points according to an embodiment of the present application.
FIG. 7 shows a schematic diagram of the distribution of the first straight line and the second straight line according to an embodiment of the present application.
FIG. 8 shows a flowchart of performing linear fitting on the skeleton line to obtain the processing path of the workpiece according to an embodiment of the present application.
FIG. 9 shows a flowchart of performing linear fitting on the skeleton line to obtain the processing path of the workpiece according to another embodiment of the present application.
FIG. 10 shows a flowchart of determining whether the skeleton line can form a closed graph according to an embodiment of the present application.
FIG. 11 shows a hardware structure diagram of implementing the method for obtaining the workpiece path according to an embodiment of the present application.

### DETAILED DESCRIPTION OF THE EMBODIMENTS

Now, the exemplary embodiments will be described more comprehensively with reference to the accompanying drawings. However, the exemplary embodiments can be implemented in various forms and should not be construed as being limited to the examples set forth herein; rather, these exemplary embodiments are provided so that the present application will be more thorough and complete, and the concept of the exemplary embodiments will be fully conveyed to those skilled in the art. The accompanying drawings are only schematic illustrations of the present application and are not necessarily drawn to scale. The same reference numerals in the drawings denote the same or similar parts, and thus the repeated description of them will be omitted.

Furthermore, the described features, structures, or characteristics may be combined in any suitable manner in one or more exemplary embodiments. In the following description, numerous specific details are provided to give a thorough understanding of the exemplary embodiments of the present application. However, those skilled in the art will recognize that the technical solutions of the present application can be practiced without one or more of the specific details, or other methods, components, steps, etc. may be adopted. In other cases, well-known structures, methods, implementations, or operations are not shown or described in detail to avoid obscuring the various aspects of the present application and making them unclear.

Some of the block diagrams shown in the accompanying drawings are functional entities and do not necessarily have to correspond to physically or logically independent entities. These functional entities can be implemented in the form of software, or implemented in one or more hardware modules or integrated circuits, or implemented in different networks and/or processor devices and/or microcontroller devices.

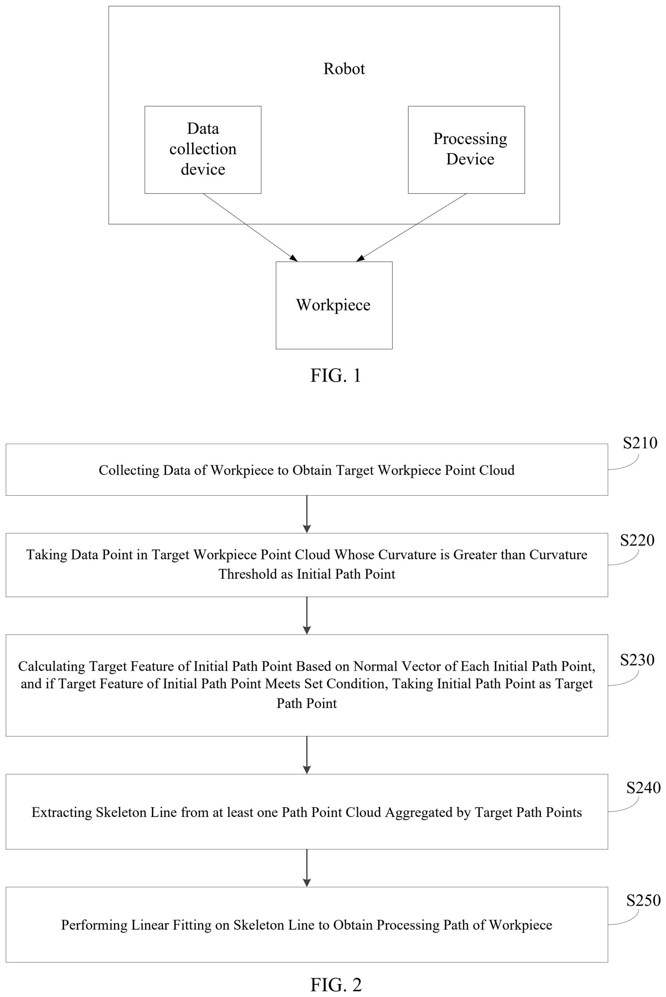

Please refer to FIG. 1, FIG. 1 shows a schematic diagram of a robot processing a workpiece according to an embodiment of the present application. The schematic diagram includes a robot and a workpiece. The robot is used to obtain the processing path of the workpiece and process the workpiece. The workpiece is used to be processed.

A control device can be installed in the robot to directly control the robot to execute the method for determining the processing path described in the present application, and to control the robot to process the workpiece.

In some embodiments, the control device is provided outside the robot, and the control device is connected to the robot wirelessly or by wire to control the robot to execute the method for the processing path described in the present application, and to control other devices of the robot to process the workpiece.

In some embodiments, the robot further includes a data collection device and a processing device. The data collection device is used to collect data of the workpiece. The processing device is used to process the workpiece. The processing includes all behaviors that change the appearance, structure, and connection relationship of the workpiece, such as welding, cutting, grinding, and polishing.

Please refer to FIG. 2, FIG. 2 shows a flowchart of a method for obtaining a workpiece processing path according to an embodiment of the present application. The embodiment of the present application provides the steps of a method for obtaining a workpiece processing path, including:

Step S210: collecting data of the workpiece to obtain a target workpiece point cloud;

Step S220: taking a data point in the target workpiece point cloud whose curvature is greater than a curvature threshold as an initial path point;

Step S230: calculating a target feature of the initial path point based on a normal vector of each initial path point, and if the target feature of the initial path point meets a set condition, taking the initial path point as a target path point;

Step S240: extracting a skeleton line from at least one path point cloud aggregated by target path points; and

Step S250: performing linear fitting on the skeleton line to obtain the processing path of the workpiece.

The above 5 steps will be described in detail below.

In step S210, data of the workpiece is collected to obtain the target workpiece point cloud. The structural light measurement can be performed on the workpiece to obtain the target workpiece point cloud.

In some embodiments, a certain number of measurement points can also be determined on the workpiece, and then the coordinate information of each measurement point on the workpiece is obtained. Finally, according to the coordinate information of each measurement point, the data points corresponding to the obtained coordinate information are shown in the virtual space to obtain the target workpiece point cloud.

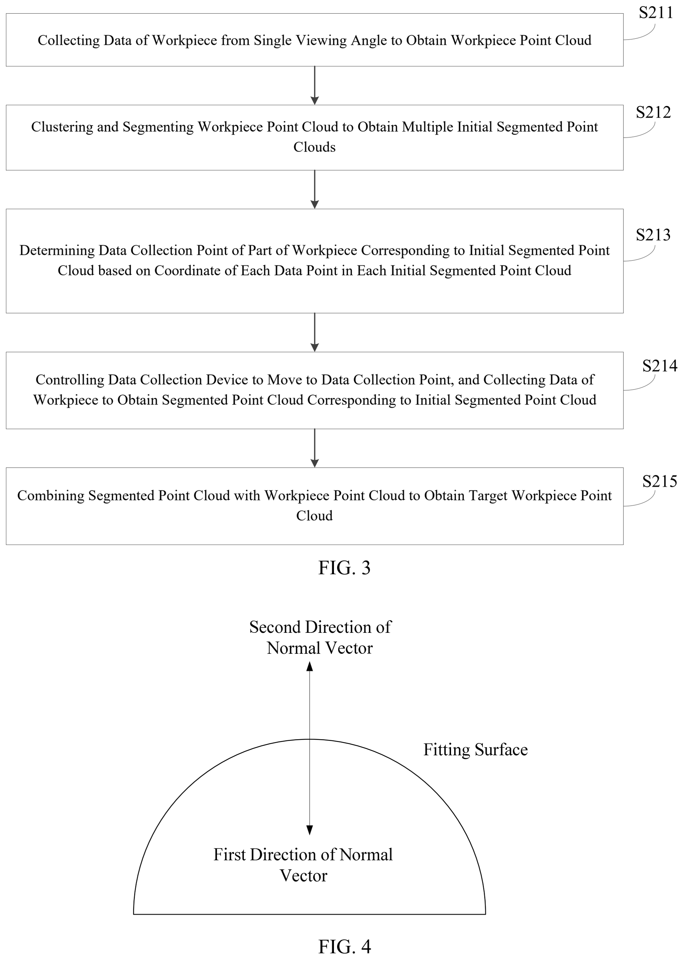

Please refer to FIG. 3, FIG. 3 shows a flowchart of collecting data of the workpiece to obtain the target workpiece point cloud according to an embodiment of the present application. The embodiment of the present application provides step S210 of collecting data of the workpiece to obtain the target workpiece point cloud, including:

Step S211: collecting the data of the workpiece from a single viewing angle to obtain a workpiece point cloud;

Step S212: clustering and segmenting the workpiece point cloud to obtain multiple initial segmented point clouds;

Step S213: determining a data collection point of a part of the workpiece corresponding to the initial segmented point cloud based on a coordinate of each data point in the each initial segmented point cloud;

Step S214: controlling a data collection device to move to the data collection point, and collecting the data of the workpiece to obtain a segmented point cloud corresponding to the initial segmented point cloud; and

Step S215: combining the segmented point cloud with the workpiece point cloud to obtain the target workpiece point cloud.

The above 5 steps will be described in detail below.

It should be noted that the workpiece point cloud obtained in step S211 is used to simply describe the structure of the workpiece. In step S212, the workpiece point cloud is segmented to obtain multiple initial segmented point clouds. In step S213, each initial segmented point cloud corresponds to a part of the workpiece. Multiple data collection points are determined according to the initial segmented point cloud. These data collection points are used to determine the data collection positions of the data collection device for the part of the workpiece corresponding to the initial segmented point cloud, so as to collect data from multiple angles (compared with step S211, step S212 is all-round collection), so as to comprehensively collect data of the part of the workpiece corresponding to the initial segmented point cloud. In step S214, the control device controls the data collection device to move to each data collection point to collect all-round data of the part of the workpiece, and then obtains the segmented point cloud corresponding to each initial segmented point cloud. Finally, in step S215, according to the position of the initial segmented point cloud corresponding to the segmented point cloud in the workpiece point cloud, the segmented point cloud is fused with the workpiece point cloud to obtain a more accurate target workpiece point cloud than the workpiece point cloud.

In step S211, first of all, it should be clear that collecting data of the workpiece from a single viewing angle means collecting data of the workpiece only from one direction or angle. For example, data of the workpiece is collected from a top-down viewing angle. The workpiece point cloud obtained by using this data collection method represents the overall structure or approximate structure of the workpiece.

Exemplarily, the control device controls the data collection device to always emit line laser to the workpiece in one direction, to form light on the surface of the workpiece. The coordinate information of the region covered by the light on the surface of the workpiece is obtained, and the robot is controlled to move along the axial direction of the workpiece, so that the light formed by the line laser traverses the surface of one side of the workpiece, and then all the coordinate information of the surface of one side of the workpiece is obtained by using a preset measurement method to form the workpiece point cloud.

In some embodiments, the control device can also control the data collection device to emit a measurement pattern to the workpiece in a set direction. The measurement pattern can cover all or part of the region on one side of the surface of the workpiece, and then the data of the region covered by the measurement pattern on the surface of the workpiece is obtained according to the deformation of the measurement pattern to obtain the workpiece point cloud.

It should be clear that whether it is the region traversed by the light or the region covered by the measurement pattern, it can be all or part of the surface of one side of the workpiece, which depends on the preset collection parameters in the control device. The collection parameters can be generated by the control device in response to the operation behavior of the user.

In step S212, clustering and segmenting on the obtained workpiece point cloud, and the workpiece point cloud is segmented to obtain multiple initial segmented point clouds.

In some embodiments, the workpiece point cloud is segmented at intervals along the axial direction of the workpiece point cloud to obtain multiple initial segmented point clouds.

In some embodiments, the workpiece point cloud is segmented along the axial direction of the workpiece point cloud to obtain multiple initial segmented point clouds, and the difference in the number of data points in each initial segmented point cloud is within a set range. That is, the number of data points in each initial segmented point cloud is approximately the same, which may make the "lengths different" of each initial segmented point cloud (the length refers to the axial length of the workpiece point cloud occupied by the initial segmented point cloud). There are differences between the complex and simple structures of different parts of the workpiece. For the part of the workpiece with a complex structure, its surface region will be larger. When measuring the workpiece from a certain direction, there may be more measurement points distributed on the surface of the complex part of the workpiece. Therefore, for the workpiece point cloud corresponding to this part of the workpiece, the density of data points will be greater. Thus the workpiece point cloud corresponding to the complex part of the workpiece will be segmented more frequently to obtain multiple initial segmented point clouds. Subsequently, data collection points are determined for each initial segmented point cloud corresponding to the complex part of the workpiece. Since initial segmented point clouds corresponding to the complex part of the workpiece are more, more data collection points can be distributed around the complex part of the workpiece, so that more accurate data can be collected for the complex part of the workpiece compared with the simple part. In the embodiment of the present application, targeted data collection for the complex and simple parts of the workpiece is realized, making the finally obtained target workpiece point cloud more accurate.

Through the method described in this embodiment, different numbers of data collection points can be respectively allocated to the simple and complex parts of the workpiece, and targeted data collection can be performed on the simple and complex parts of the workpiece. While ensuring accurate data collection of the workpiece, it will not waste excessive computing resources on the simple parts of the workpiece.

In addition, the embodiment of the present application can also separate the simple and complex parts of the workpiece corresponding to the workpiece point cloud, to obtain initial segmented point clouds with different "lengths", and it is entirely possible to determine the complexity degree of the initial segmented point cloud according to the length of the initial segmented point cloud, and then determine whether to allocate a larger number of data collection points according to the complexity degree of the initial segmented point cloud, so as to conduct more detailed data collection on the part of the workpiece corresponding to the complex initial segmented point cloud, thereby avoiding insufficient data collection on the part of the workpiece corresponding to the complex initial segmented point cloud due to a small number of data collection points, thus failing to find the position on the workpiece that needs to be processed to obtain the processing path.

In some embodiments, the initial segmented point cloud can be obtained in the following way.

Taking any unclustered data point in the workpiece point cloud as a seed point. A neighborhood of the seed point is formed with a radius of the first set distance. All the data points in the neighborhood of the seed point are sorted into the same clustering cluster, and it continues to select any data point in the clustering cluster as a seed point, to determine the neighborhood of the seed point, and the data points in the neighborhood of the seed point are added to the clustering cluster to grow the clustering cluster, that is, taking each data point in the clustering cluster as a seed point, to determine the adjacent points of the seed point with a radius of the first set distance. Continuously the adjacent points of the seed point are added to the clustering cluster to which the seed point belongs, so as to continuously grow the clustering cluster until the clustering cluster cannot grow anymore, that is, the adjacent points of any data point in the clustering cluster when taken as the seed point have all been added to the current clustering cluster. The point cloud formed by all the data points in the clustering cluster is taken as one initial segmented point cloud. Continuing to take any unclustered data point in the workpiece point cloud as the seed point to determine the next clustering cluster until after determining a clustering cluster, there are no unclustered data points in the workpiece point cloud, and the clustering and segmentation of the workpiece point cloud are completed.

In step S213, the data collection points of the part of the workpiece corresponding to each initial segmented point cloud are determined according to the coordinate information of the data points in each initial segmented point cloud. Since the workpiece point cloud is used to describe the overall structure of the workpiece, and the initial segmented point cloud is a part of the workpiece point cloud, so that the initial segmented point cloud corresponds to a part of the workpiece point cloud, and each initial segmented point cloud corresponds to a part of the workpiece.

In some embodiments, the determination of the data collection points of the initial segmented point cloud includes the determination of the number of data collection points and the setting of the positions of the data collection points.

The collection area of the collection device is the area where the collection device can perform a single data collection on the surface of the workpiece, or can also be the area where a single collection device can perform data collection on the surface of the workpiece. There can be one collection device, and the data collection of the workpiece is completed by moving the collection device. There also can be a plurality of the collection devices, distributed at different positions to complete the data collection of the workpiece.

The number of data collection points corresponding to the initial segmented point cloud can be determined in different ways according to different data collection devices. Generally, there are three types of data collection devices. (1) The collection area of the data collection device is determined and does not change with the change of the distance between the data collection device and the workpiece, that is, the collection accuracy of the first type of data collection device is fixed. (2) The collection area of the data collection device can be freely adjusted and is not affected by the distance between the data collection device and the workpiece. There is a negative correlation between the collection area and the collection accuracy of the data collection device. (3) The collection area of the data collection device can only increase as the distance between the data collection device and the workpiece increases, and the larger the collection area, the lower the data collection accuracy. That is, the greater the distance between the data collection device and the workpiece, the lower the data collection accuracy.
(1) For the first type of data collection device the number of data collection points of the initial segmented point cloud is determined in the following way:

Taking the centroid of the initial segmented point cloud as a center to determine a minimum enclosing space of the initial segmented point cloud. It should be clear that the shape of the minimum enclosing space includes but is not limited to a quadrangular prism and a sphere.

According to the collection area of the data collection device and the surface area of the minimum enclosing space, the number of data collection points is determined on the surface of the minimum enclosing space. In some embodiments, the area ratio of the surface area of the minimum enclosing space to the collection area is calculated, and the natural number closest to and greater than the area ratio is taken as the number of data collection points, which can just meet the requirement that the collection area of the data collection device can traverse all the positions of the part of the workpiece corresponding to the initial segmented point cloud. The area of the collection region is the collection area of the data collection device.

In some embodiments, the sum of the natural number closest to and greater than the area ratio and a set value is taken as the number of data collection points, to prevent the data collection device from being unable to traverse all the positions of the part of the workpiece corresponding to the initial segmented point cloud due to the complex structure of the workpiece.

That is, the number of data collection points should be sufficient to enable the collection region of the data collection device to traverse all the positions of the part of the workpiece corresponding to the initial segmented point cloud.

(2) For the second type of data collection device, the number of data collection points of the initial segmented point cloud is determined in the following way:

Taking the centroid of the initial segmented point cloud as a center to determine the minimum enclosing space of the initial segmented point cloud. It should be clear that the shape of the minimum enclosing space includes but is not limited to a quadrangular prism and a sphere.

The collection area of the data collection device is determined according to the preset data collection accuracy. The data collection accuracy can be set by the control device according to the instruction information triggered by the user's operation. Then, the number of data collection points is determined according to the data collection area and the surface area of the minimum enclosing space.

According to the collection area of the data collection device and the surface area of the minimum enclosing space, the number of data collection points on the surface of the minimum enclosing space is determined. In some embodiments, the area ratio of the surface area of the minimum enclosing space to the collection area is calculated, and the natural number closest to and greater than the area ratio is taken as the number of data collection points, which can meet the requirement that the collection region of the data collection device can traverse all the positions of the part of the workpiece corresponding to the initial segmented point cloud. The area of the collection region is the collection area of the data collection device.

In some embodiments, the sum of the natural number closest to and greater than the area ratio and a set value is taken as the number of data collection points, to prevent the data collection device from being unable to traverse all the positions of the part of the workpiece corresponding to the initial segmented point cloud due to the complex structure of the workpiece.

(3) For the third type of data collection device, the number of data collection points of the initial segmented point cloud is determined in the following way.

Taking the centroid of the initial segmented point cloud as a center to determine the minimum enclosing space of the initial segmented point cloud. It should be clear that the shape of the minimum enclosing space includes but is not limited to a quadrangular prism and a sphere.

The collection area of the data collection device is determined according to the preset data collection accuracy. The distance between the data collection device and the workpiece is determined according to the data collection area, because there is a positive correlation between the distance between the data collection device and the workpiece and the collection area, thus the collection area is adjusted by adjusting the distance between the data collection device and the workpiece.

The collection space is determined according to the distance between the data collection device and the workpiece. The collection space is larger than the minimum enclosing space, and there is a scaling relationship between the collection space and the minimum enclosing space. That is, the collection space is a space obtained by scaling up the minimum enclosing space in equal proportion.

According to the collection area of the data collection device and the surface area of the minimum enclosing space, the number of data collection points located in the collection space is determined. In some embodiments, the ratio of the surface area of the minimum enclosing space to the collection area is calculated, and the natural number closest to and greater than the area ratio is taken as the number of data collection points, which can just meet the requirement that the collection region of the data collection device can traverse all the positions of the part of the workpiece corresponding to the initial segmented point cloud. The area of the collection region is the collection area of the data collection device.

In some embodiments, the sum of the natural number closest to and greater than the area ratio and a set value is taken as the number of data collection points, to prevent the data collection device from being unable to traverse all the positions of the part of the workpiece corresponding to the initial segmented point cloud due to the complex structure of the workpiece.

The determination of the positions of the data collection points can use the following methods.

For the first type of data collection device and the second type of data collection device, the data collection points are distributed on the surface of the minimum enclosing space.

First, through neural network training, the positions of the data collection points are automatically generated, so that the collection region of the data collection device can traverse all the positions of the part of the workpiece corresponding to the initial segmented point cloud.

Second, the experimental regions with the same number as the data collection points are determined. Each data collection point corresponds to one experimental region. The area of each experimental region is the same as the sampling area, and the shape of each experimental region is the same as the sampling region. The experimental regions are arranged closely on the surface of the minimum enclosing space, so that multiple experimental regions are distributed all over the positions of the minimum enclosing space. The central position of each experimental region is taken as the position of the corresponding data collection point.

If there are remaining experimental regions, the remaining experimental regions are moved to the joints of any number of experimental regions to increase the accuracy of the segmented point cloud obtained subsequently.

For the third type of data collection device, the data collection points are distributed on the surface of the collection space.

First, through neural network training, the positions of the data collection points are automatically generated, so that the collection region of the data collection device can traverse all the positions of the part of the workpiece corresponding to the initial segmented point cloud.

Second, the experimental regions with the same number as the data collection points are determined. Each data collection point corresponds to one experimental region. The area of each experimental region is the same as the sampling area, and the shape of each experimental region is the same as the sampling region. The experimental regions are arranged closely on the surface of the minimum enclosing space, so that multiple experimental regions are distributed all over the positions of the minimum enclosing space. The positions of the data collection points corresponding to each experimental region located in the collection space are obtained, which are the positions of each data collection point.

In step S214, the control device controls the data collection device to move to the data collection point, and collects data of the workpiece to obtain the segmented point cloud corresponding to each initial segmented point cloud. Multiple data collection points around the workpiece enable the data collection device to collect data of the workpiece from multiple perspectives to obtain the segmented point clouds. That is, in step S211, it is only necessary to collect data from a single angle to obtain the workpiece point cloud representing the structure of the workpiece. In step S214, detailed data collection needs to be performed on the part of the workpiece corresponding to the initial path point cloud, so that data is collected from multiple perspectives.

In step S215, each initial segmented point cloud has a corresponding position in the workpiece point cloud. According to the corresponding position of the initial segmented point cloud in the workpiece point cloud, the segmented point cloud corresponding to the initial segmented point cloud is fused into the workpiece point cloud to obtain the target workpiece point cloud.

In some embodiments, there are multiple alignment points on the workpiece. The segmented point cloud and the workpiece point cloud can be fused in the following way. Firstly, the part of the workpiece corresponding to the segmented point cloud is determined. Secondly, at least two alignment points on the part of the workpiece corresponding to the segmented point cloud are taken as the target alignment points. The first mapping point corresponding to the target alignment point is determined in the segmented point cloud, and the second mapping point corresponding to the target alignment point is determined in the workpiece point cloud. The segmented point cloud is rotated and translated to the first mapping point to coincide with the second mapping point, and then the fusion of this segmented point cloud and the workpiece point cloud is completed. Each segmented point cloud is fused with the workpiece point cloud to obtain the target workpiece point cloud.

In some implementations, since the coordinate information of each data point in both the workpiece point cloud and the segmented point cloud comes from the same coordinate system, the workpiece point cloud and the segmented point cloud can be directly fused to obtain the target workpiece point cloud.

In the embodiment of the present application, the target workpiece point cloud is obtained in this way. Firstly, rough data collection is performed on the workpiece to position the workpiece and obtain the simple structure of the workpiece. Secondly, the workpiece point cloud is segmented, to obtain data collection points respectively. The determination of data collection points for the initial segmented point cloud is more targeted, so that each initial segmented point cloud has a more appropriate number of data collection points, which ensures the accuracy of data collection without wasting computing resources. Thirdly, the segmented point cloud obtained through multi-directional data collection is obtained through these data collection points. Since the data collection points are obtained according to the initial segmented point cloud respectively, they are more suitable for the part of the workpiece corresponding to the initial segmented point cloud, and then the segmented point cloud of the part of the workpiece corresponding to each initial segmented point cloud can be obtained more accurately. Finally, the segmented point cloud is fused with the workpiece point cloud to obtain the target workpiece point cloud. In the above process, the segmented point cloud focuses on the details of the part of the workpiece but lacks the coordination of the overall structure. The workpiece point cloud focuses on the overall structure of the workpiece but lacks the detailed description of the workpiece. Since the workpiece point cloud is fused with each segmented point cloud, the details of the workpiece can be optimally described, and the description of the overall workpiece is more coordinated.

In step S220, the curvature of each data point in the target workpiece point cloud is calculated. Because the position on the workpiece that needs to be processed (that is, the position where the processing path to be determined is located in the present application) generally has significantly different characteristics compared with the position on the workpiece that does not need to be processed. For example, the position on the workpiece that needs to be processed generally exists in the form of a groove, or at the joint of different parts of the workpiece. Whether it is a groove or the joint of different parts of the workpiece, it will produce the clamping of two different planes. Exemplarily, the internal angle (also called the concave angle) formed by different sides of the workpiece. To some extent, the groove can also be regarded as the internal angle formed by different sides of the workpiece. Therefore, the curvature of the part of the workpiece that needs to be processed is definitely larger than that of the plane. Because the position on the workpiece that does not need to be processed is generally located at a relatively flat position on the surface of the workpiece, so the curvature of the position on the workpiece that does not need to be processed is smaller than that of the position on the workpiece that needs to be processed.

However, if the position on the workpiece that needs to be processed is directly determined in the above way and then determined as the processing path, it is easily affected by the structure of the workpiece itself and the external environment. Therefore, only through the above way, the data points in the target workpiece point cloud are preliminarily screened to obtain the initial path points. When determining the processing path subsequently, the amount of data to be processed is reduced, computing resources are saved, and computing efficiency is improved.

For the determination of the curvature of the data points in the target workpiece point cloud, in some embodiments, for any data point in the target workpiece point cloud, the neighborhood of this data point is determined with a preset length as the radius. The surface of the neighborhood of this data point is fitted to obtain a fitting plane, and then based on the coordinate information of each data point in the neighborhood, a mathematical method is used to calculate the curvature of the fitting plane as the curvature of this data point.

The data points in the target workpiece point cloud whose curvature is greater than the curvature threshold are taken as the initial path points. In some embodiments, the curvature threshold is obtained through multiple experiments in the laboratory. The current curvature threshold can make the initial path points fewer, but ensure that the initial path points almost contain all the target path points and the formation of each processing path on the workpiece will not be affected.

In some embodiments, based on the fact that the workpiece has different types or is applied to different industries, each type of workpieces has a corresponding curvature threshold. The workpiece type corresponding to the workpiece is obtained; the curvature threshold corresponding to the workpiece is determined according to the workpiece type; the data points in the target workpiece point cloud whose curvature is greater than the curvature threshold are taken as the initial path points.

In some embodiments, the curvature and normal vector of each data point in the target workpiece point cloud can be determined in the following way.

The neighborhood of any data point in the target workpiece point cloud is determined by taking this data point as the center and the second distance as the radius. Based on the coordinate information of the data point in the neighborhood of the data point, the covariance matrix is used to calculate the eigenvalues of the neighborhood of the data point as the eigenvalues of the data point. The eigenvector corresponding to the minimum eigenvalue of the data point is taken as the normal vector of the data point, and the ratio of the minimum eigenvalue of the data point to the sum of all eigenvalues is taken as the curvature of the data point. In the embodiment of the present application, the curvature and normal vector of each data point in the target workpiece point cloud can be quickly and accurately determined through the above way.

In step S230, after initially obtaining the initial path points, there are too many noisy data points such as the data points located on the "edge" of the target workpiece point cloud, the "edge" is the included angle formed by two adjacent sides of the workpiece, but it is an external angle (also called the convex angle). The curvature of the data points located on the "edge" of the target workpiece point cloud will also be relatively large. Therefore, in step S220, the position that obviously does not belong to the position on the workpiece that needs to be processed will also be mistakenly regarded as the initial path point.

The reason for this situation is that the curvature does not have a direction. Therefore, whether it is bending towards the workpiece (such as the "edge" in the target workpiece point cloud) or bending away from the center of the workpiece (such as the groove in the workpiece), the curvature will be relatively large and regarded as the initial path point. For this situation, taking the normal vector with a direction as a reference can distinguish the above situation. For example, the normal vectors of all the initial path points are obtained, and the target feature of each initial path point is calculated according to the normal vector of each initial path point.

Regarding the acquisition of the normal vector, first the curved surface formed by fitting the neighborhood of the initial path point is determined. The linear vector passing through this initial path point and perpendicular to the curved surface is the normal vector of this path point. The normal vector has two directions, the first direction is the same as the bending direction of the fitted curved surface. The second direction is opposite to the first direction. Please refer to FIG. 4, which shows a schematic diagram of the direction of the normal vector according to an embodiment of the present application.

Please continue to refer to FIG. 4, it can be seen that for the initial path points located at the external angle, the first direction of their normal vectors faces the workpiece. For the initial path points located at the internal angle, the first direction of their normal vectors faces outside the workpiece. That is, the initial path points whose the first direction of the normal vector faces the workpiece can be taken as the target path points.

In some embodiments, the target feature of the initial path point can represent the direction of the normal vector of the initial path point in the form of a numerical value or other forms, for example, different orientations of the first direction of the normal vector of the initial path point correspond to different target features. The first direction of the normal vector of the initial path point facing the workpiece is one type of target feature, and the first direction of the normal vector of the initial path point facing outside the workpiece is another type of target feature.

For different target features, the initial path points can be screened by setting a set condition. The set condition is used to screen out the initial path points whose the first direction of the normal vector faces outside the workpiece, and these initial path points are taken as the target path points. The target path points obtained by screening the initial path points are realized.

In some embodiments, the first direction of the normal vector of the initial path point can be directly taken as the target feature of the initial path point, so as to screen out the target path points from the initial path points through the set condition.

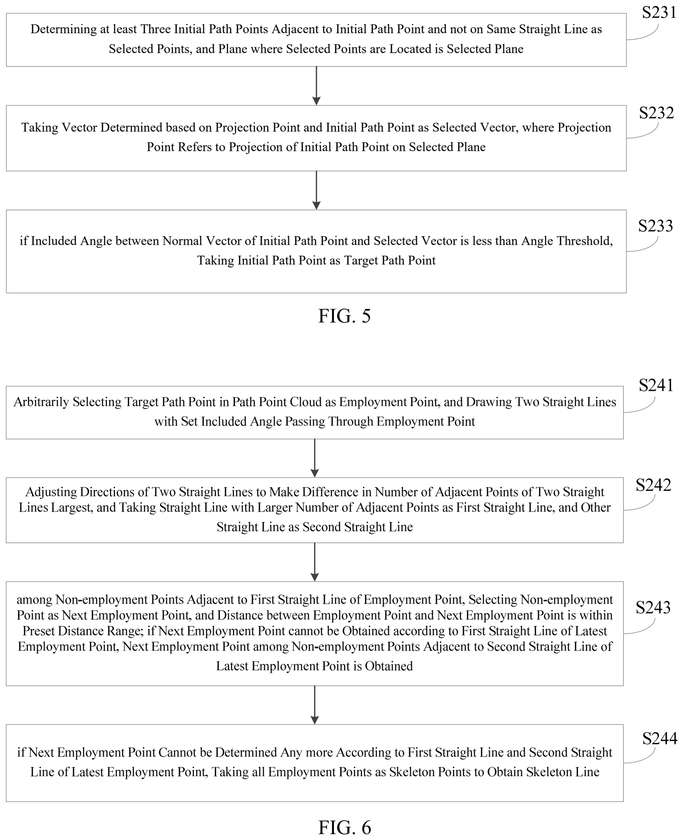

Please refer to FIG. 5, FIG. 5 shows a flowchart of determining the target path points from the initial path points according to the normal vectors of the initial path points according to an embodiment of the present application. The embodiment of the present application provides step S230 of determining the target path points from the initial path points according to the normal vectors of the initial path points, including:

Step S231: determining at least three initial path points adjacent to the initial path point and not on a same straight line as selected points, and the plane where the selected points are located is a selected plane;

Step S232: taking a vector determined based on a projection point and the initial path point as a selected vector, where the projection point refers to a projection of the initial path point on the selected plane; and

Step S233: if an included angle between the normal vector of the initial path point and the selected vector is less than the angle threshold, taking the initial path point as the target path point.

The above 3 steps will be described in detail below.

Since it is necessary to determine whether each initial path point is the target path point, taking any one initial path point as an example, it is determined whether this initial path point is the target path point in the following way.

In step S231, determining at least three initial path points adjacent to the initial path point and not on the same straight line as the selected points, and taking the plane where the selected points are located as the selected plane.

In step S232, taking the projection of the initial path point on the selected plane as the projection point. According to the projection point and the initial path point, a vector passing through the initial path point and the projection point in turn can be calculated as the selected vector.

In some embodiments, the direction of the selected vector is the direction from the initial path point to the projection point.

In step S233, if the included angle between the normal vector of the initial path point and the selected vector is less than the angle threshold, taking the initial path point as the target path point. That is, the included angle between the normal vector of the initial path point and the selected vector is taken as the target feature, and the condition that the included angle between the normal vector of the initial path point and the selected vector is less than the angle threshold is taken as the set condition to determine the target path points among many initial path points.

The initial path points whose the included angle between the normal vector and the selected vector is less than the angle threshold, in specific experiments, the first direction of the normal vector of such initial path points faces outside the workpiece. Therefore, if the included angle between the normal vector of the initial path point and the selected vector is less than the angle threshold, the initial path point is taken as the target path point. Through the pre-set calculation method, the target feature of the initial path point can be directly calculated according to the normal vector of the initial path point, making the target feature be numericalization. This can more conveniently calculate the target feature of the initial path point, and can more efficiently determine the target path points among the initial path points.

In step S240, there may be multiple processing paths on the workpiece. The target path points belonging to the same processing path must be aggregated together, because the distance between the target path points belonging to the same processing path is small. Then, the target path points can be clustered according to the distance between the target path points to obtain at least one path point cloud representing the processing path.

In some embodiments, since the target path points may represent many processing paths, the target path points are clustered according to the distance between the target path points to obtain at least one set of target path points, and each set of target path points corresponds to a path point cloud representing the processing path.

On the one hand, since there are many target path points in the path point cloud, when the control device controls the robot to perform processing, it needs to know in what order to traverse the target path points to complete the processing of the workpiece. On the other hand, even if the traversal order of the target path points is known, if a large number of target path points are traversed one by one, the computing resources required by the control device will be greatly increased, and then the processing efficiency will be reduced. Since the processing path generally exists in the form of a line, the path point cloud can be simplified into the form of a "line". For example, the skeleton line of the path point cloud is extracted, and the skeleton line of the path point cloud is obtained to replace the path point cloud.

Please refer to FIG. 6, FIG. 6 shows a flowchart of extracting the skeleton line from at least one path point cloud aggregated by the target path points according to an embodiment of the present application. The embodiment of the present application provides step S240 of extracting the skeleton line from at least one path point cloud aggregated by the target path points according to an embodiment of the present application, including:

Step S241: arbitrarily selecting a target path point in the path point cloud as an employment point, and drawing two straight lines with a set included angle passing through the employment point;

Step S242: adjusting directions of the two straight lines to make the difference in the number of adjacent points of the two straight lines the largest, and taking the straight line with a larger number of adjacent points as the first straight line, and the other straight line as the second straight line;

Step S243: among the non-employment points adjacent to the first straight line of the employment point, selecting a non-employment point as the next employment point, and the distance between the employment point and the next employment point is within the preset distance range; if the next employment point cannot be obtained according to the first straight line of the latest employment point, the next employment point among the non-employment points adjacent to the second straight line of the latest employment point is obtained; and

Step S244: if the next employment point cannot be determined any more according to the first straight line and the second straight line of the latest employment point, taking all the employment points as the skeleton points to obtain the skeleton line.

The above 4 steps will be described in detail below.

Step S241: arbitrarily selecting a target path point in the path point cloud as the employment point, and drawing two straight lines with a set included angle passing through the employment point. The employment point is the intersection point of these two straight lines. In some embodiments, a right angle or 45 degrees is taken as the set included angle of the two straight lines. Because the angle at the joint of each part of the workpiece is mostly a right angle or 45 degrees.

Specifically, the surface of the path point cloud is fitted to obtain a path plane. Two straight lines with a set included angle passing through the selected point are drawn, and the plane where these two straight lines are located is parallel to or belongs to the path plane.

In step S242, the two straight lines are rotated simultaneously to change the directions of the two straight lines. The plane where the two straight lines are located rotates 360 degrees around the intersection point of the two lines. During this process, the difference in the number of adjacent points of the two straight lines is recorded.

It should be clear that the adjacent points of the two straight lines can be obtained in the following way. For any straight line, the number of target path points in the path point cloud whose distance from this straight line is less than the preset length is calculated, which is the number of adjacent points of this straight line. The number of adjacent points of the two straight lines is obtained respectively and the difference in the number of adjacent points of the two straight lines is obtained.

According to the difference in the number of adjacent points of the two straight lines at different angles, the two straight lines are rotated to the angle with the largest difference in the number of adjacent points. At this time, the straight line with a larger number of adjacent points among the two straight lines is taken as the first straight line, and the other straight line as the second straight line.

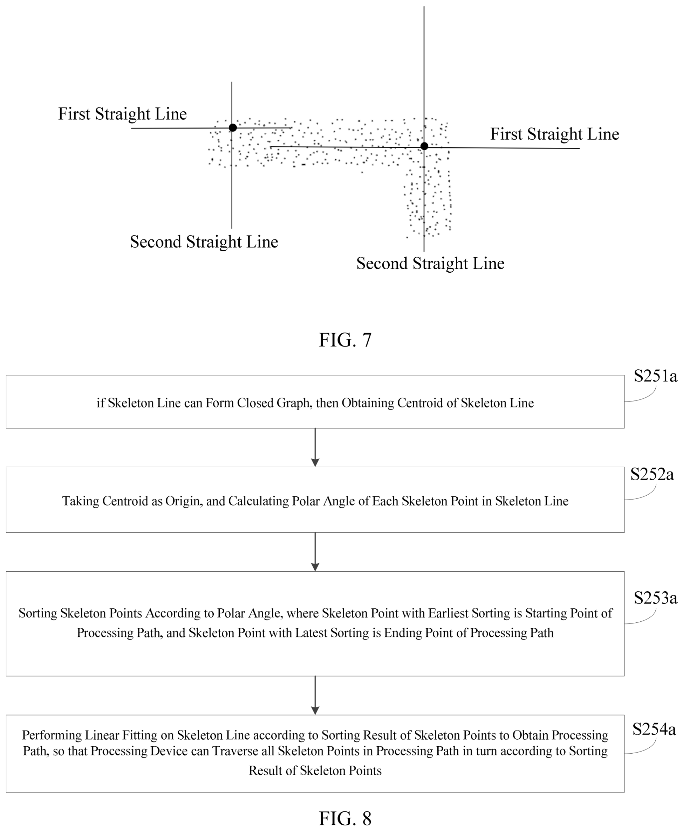

At this time, the straight line where the first straight line is located is the axial direction of part of the path point cloud. Please refer to FIG. 7, FIG. 7 shows a schematic diagram of the distribution of the first straight line and the second straight line according to an embodiment of the present application. Since the path point cloud is mostly strip-shaped, it can also be called rectangular. When the difference in the number of adjacent points of the two straight lines is the largest, it indicates that one straight line coincides with most of the path point cloud, and the extension direction of this straight line is the same as the extension direction of the path point cloud, that is, the first straight line. The greatest feature of the skeleton line is to represent the extension direction of the path point cloud. Therefore, the adjacent points of the first straight line can all be taken as the employment points. However, in order to prevent the path point cloud from being bent or having a corner, the adjacent employment points are determined only according to the first straight line of the current employment point, and then the next employment point of the newly obtained employment point is obtained according to the first straight line of the newly obtained employment point. This ensures that the finally obtained skeleton line maximally guarantees the extension direction of the path point cloud.

In step S243, among the adjacent points of the first straight line of the current selected point, determining a target path point whose distance from the current employment point is within the set range point and that is not a non-employment point as the next employment point. Each employment point has corresponding two straight lines, and for each employment point, the technical means described in step S241 and step S242 are used to determine the first straight line and the second straight line of this employment point.

It should be clear that the first straight line has two directions, and in theory, the employment point can be determined on each of two sides of each employment point. However, this situation is only applicable when the first employment point determines the next adjacent employment point, because only the two sides of the first employment point have no adjacent employment points, and the subsequently determined employment points only have no determined adjacent employment points in one of the directions of the first straight line. Therefore, in order to avoid determining two employment points on the two sides of the subsequently determined employment points again, resulting in repeated determination of the employment points, assuming that: for any one of the two directions of the first straight line, if there is already an employment point among the target path points whose distance from the current employment point is within the preset distance range, there is no need to determine a employment point in this direction. If there is no employment point among the target path points whose distance from the current employment point is within the preset distance range, among the adjacent points of the first straight line of the current employment point, any target path point that is not the employment point is determined as the next employment point adjacent to the current employment point.

Please refer to FIG. 7 continuously, FIG. 7 also shows another distribution of the first straight line and the second straight line. When the current employment point is at the corner of the path point cloud, in the left direction of the first straight line of the current employment point, there is already an employment point within the preset distance range from the current employment point, so that a new employment point cannot be determined in the left direction of the first straight line of the current employment point. In the right direction of the first straight line of the current employment point, there are no adjacent points of the first straight line is within the preset distance range from the current employment point, so that at this moment, the next employment point cannot be determined according to the first straight line of the current employment point. However, there are still parts of the path point cloud that have not been subjected to skeleton line extraction. At this time, checking whether there is a target path point that is within the preset distance range from the current employment point and is not a skeleton point among the adjacent points of the second straight line of the current employment point. If there is such a point, then any one of these target path points that is not a skeleton point is taken as the next employment point of the current employment point. For the newly obtained employment point, the adjacent points of the first straight line are still preferentially used to determine the next employment point.

It should be noted that the current employment point refers to the newly obtained employment point.

In step S244, the technical means described in step S243 are still used for the newly obtained employment point to determine the next employment point until the newly obtained employment point cannot determine the next employment point among the adjacent points of the first straight line and the second straight line, all the employment points are taken as skeleton points, and these skeleton points form the skeleton line of the path point cloud. That is, the extraction of the skeleton line from the path point cloud is completed.

Through the method in the embodiment of the present application, the extraction of the skeleton line from the path point cloud can be completed, and the shape of the path point cloud can be maintained to the greatest extent, without being affected by the bending of the path point cloud.

In step S250, the skeleton line is fitted, and the traversal order of the target path points in the skeleton line is determined, or the starting point and the ending point of the processing path are determined, and then the processing direction of the processing path is determined. This is convenient for the control device to directly control the processing device of the robot to process the workpiece according to the processing path.

Please refer to FIG. 8, FIG. 8 shows a flowchart of performing linear fitting on the skeleton line to obtain the processing path of the workpiece according to an embodiment of the present application. The embodiment of the present application provides step S250 of performing linear fitting on the skeleton line to obtain the processing path of the workpiece, including:

Step S251a: if the skeleton line can form a closed graph, then obtaining a centroid of the skeleton line;

Step S252a: taking the centroid as an origin, and calculating a polar angle of each skeleton point in the skeleton line;

Step S253a: sorting the skeleton points according to the polar angle, where the skeleton point with an earliest sorting is a starting point of the processing path, and the skeleton point with a latest sorting is an ending point of the processing path; and

Step S254a: performing linear fitting on the skeleton line according to a sorting result of the skeleton points to obtain the processing path, so that the processing device can traverse all the skeleton points in the processing path in turn according to the sorting result of the skeleton points.

The above 4 steps will be described in detail below.

Each path point cloud has a skeleton line. Now, taking one skeleton line as an example to determine the processing path.

In step S251a, if the skeleton line can form a closed graph, then the centroid of the skeleton line is obtained. That the skeleton line can be closed means that the skeleton line can form a closed graph, that is, the processing path corresponding to the skeleton line is in a loop shape. The centroid of the skeleton line is calculated according to the coordinate information of each skeleton point in the skeleton line.

In step S252a, taking the centroid as the origin, and calculating the polar angle of each skeleton point in the skeleton line. Each skeleton point has a corresponding polar angle.

In step S253a, sorting the skeleton points according to the polar angle. The skeleton point with the earliest sorting is the starting point of the processing path, and the skeleton point with the latest sorting is the ending point of the processing path.

In step S254a, performing linear fitting on the skeleton line according to the sorting result of the skeleton points to obtain the processing path, so that the processing device can traverse all the skeleton points in the processing path in turn according to the sorting result of the skeleton points.

In some embodiments, the least squares method is used to perform linear fitting on the skeleton line. In some embodiments, according to the sorting result of the skeleton points, the curve or straight line formed by connecting each skeleton point in turn is the processing path. In some embodiments, the curve or straight line formed by connecting each skeleton point in turn is optimized to remove the included angles formed at the skeleton points, to obtain a relatively smooth curve as the processing path, which is convenient for the processing device to process the workpiece more smoothly according to the processing path.

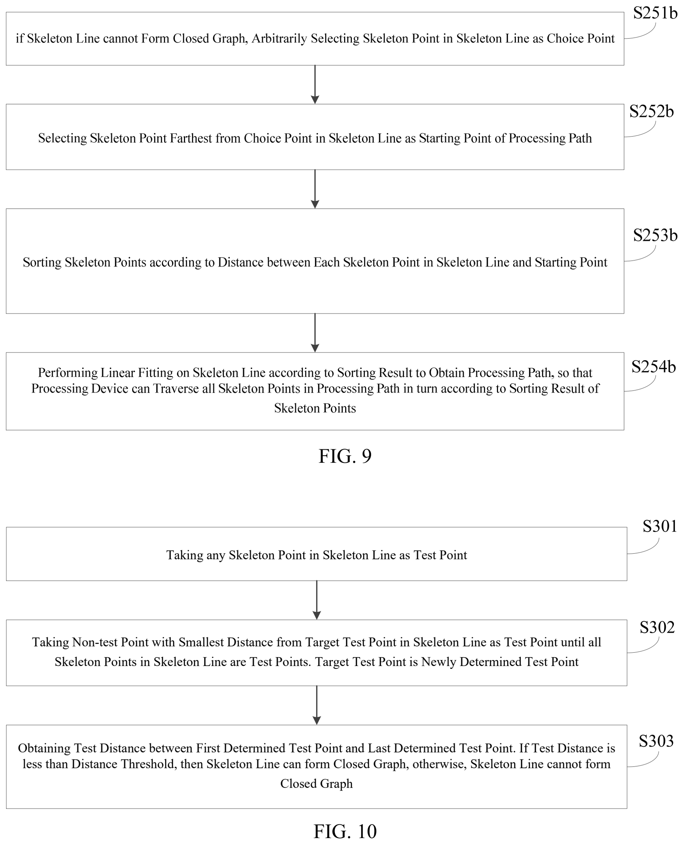

Please refer to FIG. 9, FIG. 9 shows a flowchart of performing linear fitting on the skeleton line to obtain the processing path of the workpiece according to another embodiment of the present application. The embodiment of the present application provides step S250 of performing linear fitting on the skeleton line to obtain the processing path of the workpiece, including:

Step S251b: if the skeleton line cannot form a closed graph, arbitrarily selecting a skeleton point in the skeleton line as a choice point;

Step S252b: selecting a skeleton point farthest from the choice point in the skeleton line as a starting point of the processing path;

Step S253b: sorting the skeleton points according to the distance between each skeleton point in the skeleton line and the starting point; and

Step S254b: performing linear fitting on the skeleton line according to the sorting result to obtain the processing path, so that the processing device can traverse all the skeleton points in the processing path in turn according to the sorting result of the skeleton points.

The above 4 steps will be described in detail below.

In step S251b, if the skeleton line cannot form a closed graph, arbitrarily selecting a skeleton point in the skeleton line as the choice point.

In step S252b, selecting a skeleton point farthest from the selected point in the skeleton line as a starting point of the processing path.

In step S253b, sorting the skeleton points according to a distance between each skeleton point in the skeleton line and the starting point. The skeleton point with the latest sorting is an ending point of the processing path.

In step S254b, performing linear fitting on the skeleton line according to the sorting result of the skeleton points to obtain the processing path, so that the processing device can traverse all the skeleton points in the processing path in turn according to the sorting result of the skeleton points. In some embodiments, the least squares method is used to perform linear fitting on the skeleton line.

In some embodiments, according to the sorting result of the skeleton points, the curve or straight line formed by connecting each skeleton point in turn is the processing path. In some embodiments, the curve or straight line formed by connecting each skeleton point in turn is optimized to remove the included angles formed at the skeleton points, to obtain a relatively smooth curve as the processing path, which is convenient for the processing device to process the workpiece more smoothly according to the processing path.

In some embodiments, after the processing path is determined, since the processing path includes a straight line processing path and a curve line processing path, and the curve processing path requires continuously changing the moving direction of the processing device, the processing path is divided into a straight line processing path and a curve line processing path, and different processing modes are used for the straight line processing path and the curve line processing path.

In some embodiments, the curvature of each point on the processing path is calculated; if the curvature difference between adjacent points is greater than the first curvature threshold, then any one of the adjacent points is taken as a break point, and the processing path is cut to obtain multiple sub-processing paths. The average curvature of each point on the sub-processing path is obtained. If the average curvature is greater than the second curvature threshold, then the sub-processing path is taken as a curve line processing path, otherwise, the sub-processing path is taken as a straight-line processing path. The processing posture of the processing device is calculated for the curve line processing path. For the straight-line processing path, the processing is performed directly in the corresponding straight-line processing mode.

Since the processing path may be at the joint between parts of the workpiece, at the included angle between two sides of the workpiece, or in the form of a groove, especially for the curve line processing path, the control device needs to control the moving direction of the processing device. In order to better process the curve line processing path, requirements are imposed on the processing posture of the processing device, especially when processing the curve line processing path the specific way to obtain the processing posture of the processing device is as follows: according to the processing direction of the curve line processing path and the curvature of each processing point on the curve line processing path, calculating the tangential component and the normal component of each processing point on the curve line processing path; taking the tangential component and the normal component as a first number axis and a second number axis of the processing point respectively, and taking the cross product result of the tangential component and the normal component as a third number axis of the processing point; taking the contact end of the processing device to form set angles with the first number axis, the second number axis, and the third number axis respectively as the processing posture of the processing device.

It should be noted that in some embodiments, the above processing posture can also be used as the processing posture for the straight line processing path.

Please refer to FIG. 10, FIG. 10 shows a flowchart of determining whether the skeleton line can form a closed graph according to an embodiment of the present application. The embodiment of the present application provides the steps of determining whether the skeleton line can form a closed graph, including:

Step S301: taking any skeleton point in the skeleton line as a test point;

Step S302: taking a non-test point with the smallest distance from a target test point in the skeleton line as the test point until all the skeleton points in the skeleton line are test points. The target test point is the newly determined test point;

Step S303: obtaining the test distance between the first determined test point and the last determined test point. If the test distance is less than the distance threshold, then the skeleton line can form a closed graph, otherwise, the skeleton line cannot form a closed graph.

The above 3 steps will be described in detail below.

In step S301, taking any skeleton point in the skeleton line as a test point.

In step S302, taking the newly determined skeleton point as the target test point, and taking the non-test point with the smallest distance from the target test point in the skeleton line as the next test point until all the skeleton points in the skeleton line are test points. The non-test point refers to the skeleton point that is not used as a test point, the target test point is the newly determined test point. If there are several non-test points with the smallest distance from the target test point in the skeleton line, then one of them is selected arbitrarily as the next test point.

In step S303, obtaining the test distance between the first determined test point and the last determined test point. If the skeleton line can form a closed graph, then the last determined test point must be adjacent to the first determined test point, thus if the test distance is less than the distance threshold, then the skeleton line can form a closed graph, otherwise, the skeleton line cannot form a closed graph.

In the embodiment of the present application, it can be quickly determined whether the skeleton line can form a closed graph.

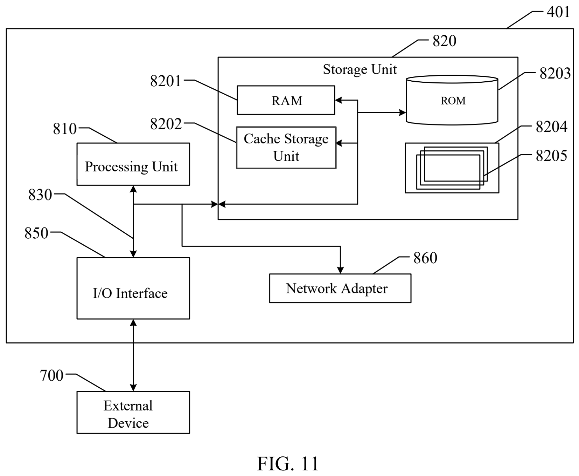

The method for obtaining the workpiece processing path in the embodiment of the present application can be implemented by the hardware device shown in FIG. 11. Hereinafter, the hardware device according to the embodiment of the present application will be described with reference to FIG. 11. The hardware device shown in FIG. 11 is merely an example and should not impose any limitations on the functions and application scope of the embodiments of the present application.

As shown in FIG. 11, the hardware device can be presented in the form of a generalpurpose computing device. The components of the hardware device may include but are not limited to: at least one processing unit 810 as described above, at least one storage unit 820 as described above, and a bus 830 connecting different system components (including the storage unit 820 and the processing unit 810).

The storage unit stores program codes, and the program codes can be executed by the processing unit 810, so that the processing unit 810 executes the steps according to various exemplary embodiments of the present invention described in the description part of the above exemplary method in this specification. For example, the processing unit 810 can execute each step shown in FIG. 2.

The storage unit 820 may include a readable medium in the form of a volatile storage unit, such as a random access memory unit (RAM) 8201 and/or a cache storage unit 8202, and may further include a read-only memory unit (ROM) 8203.

The storage unit 820 may also include a program/utility tool 8204 having a set (at least one) of program modules 8205. Such program modules 8205 include but are not limited to: an operating system, one or more application programs, other program modules, and program data. Each or some combination of these examples may include the implementation of a network environment.

The bus 830 may represent one or more of several types of bus structures, including a storage unit bus or a storage unit controller, a peripheral bus, a graphics acceleration port, a processing unit, or a local area bus using any bus structure among multiple bus structures.

The hardware device can also communicate with one or more external devices 700 (such as a keyboard, a pointing device, a Bluetooth device, etc.), and can also communicate with one or more devices that enable a user to interact with the hardware device, and/or communicate with any device (such as a router, a modem, etc.) that enables the hardware device to communicate with one or more other computing devices. Such communication can be carried out through an input/output (I/O) interface 850. Moreover, the hardware device can also communicate with one or more networks (such as a local area network (LAN), a wide area network (WAN), and/or a public network, such as the Internet) through a network adapter 860. As shown in the figure, the network adapter 860 communicates with other modules of the hardware device through the bus 830. It should be understood that although not shown in the figure, other hardware and/or software modules can be used in combination with the hardware device, including but not limited to: microcode, device drivers, redundant processing units, external disk drive arrays, Redundant Array of Independent Disks(RAID) systems, tape drives, and data backup storage systems, etc.

Through the description of the above implementation manners, those skilled in the art can easily understand that the exemplary implementation manners described here can be implemented by software, or can be implemented by a combination of software and necessary hardware. Therefore, the technical solution according to the implementation manner of the present application can be embodied in the form of a software product. The software product can be stored in a non-volatile storage medium (which can be a CD-ROM, a USB flash drive, a mobile hard disk, etc.) or on a network, and includes several instructions to enable a computing device (which can be a personal computer, a server, a terminal device, or a network device, etc.) to execute the method according to the implementation manner of the present application.

In the exemplary embodiment of the present application, a computer program medium is also provided, on which computer-readable instructions are stored. When the computer-readable instructions are executed by the processor of a computer, the computer is enabled to execute the method described in the above method embodiment part.

According to an embodiment of the present application, a program product for implementing the method in the above method embodiment is also provided. It can adopt a portable compact disc read-only memory (CD-ROM) and include program codes, and can run on a terminal device, such as a personal computer. However, the program product of the present invention is not limited thereto. In this document, a readable storage medium can be any tangible medium that contains or stores a program, and the program can be used by or in combination with an instruction execution system, device, or component.

The program product can adopt any combination of one or more readable media. A readable medium can be a readable signal medium or a readable storage medium. A readable storage medium can be, for example, but not limited to, an electrical, magnetic, optical, electromagnetic, infrared, or semiconductor system, device, or component, or any combination of the above. More specific examples (a non-exhaustive list) of the readable storage medium include: an electrical connection with one or more wires, a portable disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the above.

A computer-readable signal medium can include a data signal propagated in a baseband or as part of a carrier wave, in which readable program codes are carried. Such a propagated data signal can take various forms, including but not limited to an electromagnetic signal, an optical signal, or any suitable combination of the above. A readable signal medium can also be any readable medium other than a readable storage medium, and the readable medium can send, propagate, or transmit a program for use by or in combination with an instruction execution system, device, or component.

The program codes contained on the readable medium can be transmitted by any appropriate medium, including but not limited to wireless, wired, optical cable, RF, etc., or any suitable combination of the above.

The program codes for executing the operations of the present invention can be written in any combination of one or more programming languages. The programming languages include object-oriented programming languages such as Java, C++, etc., and also include conventional procedural programming languages such as the "C" language or similar programming languages. The program codes can be executed completely on the user's computing device, partially on the user's device, executed as an independent software package, partially on the user's computing device and partially on a remote computing device, or completely on a remote computing device or server. In the case of involving a remote computing device, the remote computing device can be connected to the user's computing device through any type of network, including a local area network (LAN) or a wide area network (WAN), or can be connected to an external computing device (for example, connected through the Internet using an Internet service provider).

It should be noted that although several modules or units of the device for action execution are mentioned in the above detailed description, this division is not mandatory. In fact, according to the implementation manner of the present application, the features and functions of two or more modules or units described above can be embodied in one module or unit. Conversely, the features and functions of one module or unit described above can be further divided to be embodied by multiple modules or units.

In addition, although the steps of the method in the present application are described in a specific order in the drawings, this does not require or imply that these steps must be executed in this specific order, or that all the shown steps must be executed to achieve the expected results. Additionally or alternatively, some steps can be omitted, multiple steps can be combined into one step for execution, and/or one step can be decomposed into multiple steps for execution, etc.

Through the description of the above implementation manners, those skilled in the art can easily understand that the exemplary implementation manners described here can be implemented by software, or can be implemented by a combination of software and necessary hardware. Therefore, the technical solution according to the implementation manner of the present application can be embodied in the form of a software product. The software product can be stored in a non-volatile storage medium (which can be a CD-ROM, a USB flash drive, a mobile hard disk, etc.) or on a network, and includes several instructions to enable a computing device (which can be a personal computer, a server, a mobile terminal, or a network device, etc.) to execute the method according to the implementation manner of the present application.

After considering the specification and practicing the invention applied here, those skilled in the art will easily think of other implementation manners of the present application. the present application is intended to cover any variations, uses, or adaptive changes of the present application. These variations, uses, or adaptive changes follow the general principles of the present application and include the common general knowledge or conventional technical means in the technical field of the present application that are not applied in the present application. The specification and examples are only regarded as exemplary, and the true scope and spirit of the present application are pointed out by the appended claims.

## Claims

1. A method for obtaining a processing path of a workpiece, comprising:
collecting (S210) data of the workpiece to obtain a target workpiece point cloud;
taking (S220) a data point in the target workpiece point cloud whose curvature is greater than a curvature threshold as an initial path point;
calculating a target feature of the initial path point based on a normal vector of each initial path point, and if the target feature of the initial path point meets a set condition, taking the initial path point as a target path point (S230);
extracting (S240) a skeleton line from at least one path point cloud aggregated by target path points; and
performing (S250) linear fitting on the skeleton line to obtain the processing path of the workpiece.

2. The method according to claim 1, wherein collecting (S210) the data of the workpiece to obtain the target workpiece point cloud comprises:
collecting (S211) the data of the workpiece from a single viewing angle to obtain a workpiece point cloud;
clustering and segmenting (S212) the workpiece point cloud to obtain multiple initial segmented point clouds;
determining (S213) a data collection point of a part of the workpiece corresponding to the initial segmented point cloud based on a coordinate of each data point in the each initial segmented point cloud;
controlling (S214) a data collection device to move to the data collection point, and collecting the data of the workpiece to obtain a segmented point cloud corresponding to the initial segmented point cloud; and
combining (S215) the segmented point cloud with the workpiece point cloud to obtain the target workpiece point cloud.

3. The method according to claim 1, wherein calculating the target feature of the initial path point based on the normal vector of each initial path point, and if the target feature of the initial path point meets the set condition, taking the initial path point as the target path point (S230) comprises:
determining (S231) at least three initial path points adjacent to the initial path point and not on a same straight line as selected points, wherein a plane where the selected points are located is a selected plane;
taking (S232) a vector determined based on a projection point and the initial path point as a selected vector, where the projection point refers to a projection of the initial path point on the selected plane; and
if an included angle between a normal vector of the initial path point and the selected vector is less than an angle threshold, taking (S233) the initial path point as the target path point.

4. The method according to claim 1, wherein extracting (S240) the skeleton line from at least one path point cloud aggregated by target path points comprises:
arbitrarily (S241) selecting one target path point in the path point cloud as an employment point, and drawing two straight lines with a set included angle passing through the employment point;
adjusting (S242) directions of the two straight lines to make a difference in a number of adjacent points of the two straight lines be largest, and taking one straight line in the two straight lines with a larger number of adjacent points as a first straight line, and another straight line of the two straight lines as a second straight line;
in non-employment points adjacent to the first straight line of the employment point, selecting one non-employment point as a next employment point, and a distance between the employment point and the next employment point is within a preset distance range; wherein if the next employment point is unable to be obtained based on the first straight line of a latest employment point newly obtained, the next employment point is obtained from non-employment points adjacent to the second straight line of the latest employment point (S243); and
if the next employment point is unable to be determined any more based on the first straight line and the second straight line of the latest employment point, taking (S244) all the employment points as skeleton points to obtain the skeleton line.

5. The method according to claim 1, wherein performing (S250) linear fitting on the skeleton line to obtain the processing path of the workpiece comprises:
if the skeleton line is able to form a closed graph, obtaining (S251a) a centroid of the skeleton line;
taking the centroid as an origin, calculating (S252a) a polar angle of each skeleton point in the skeleton line;
sorting (S253a) skeleton points based on the polar angle, wherein the skeleton point with an earliest sorting is a starting point of the processing path, and the skeleton point with a latest sorting is an end point of the processing path; and
performing (S254a) linear fitting on the skeleton line based on a sorting result of the skeleton points to obtain the processing path, so that the processing device is able to traverse all the skeleton points in the processing path in turn based on the sorting result of the skeleton points.

6. The method according to claim 1, wherein performing (S250) linear fitting on the skeleton line to obtain the processing path of the workpiece comprises:
if the skeleton line is unable to form a closed graph, arbitrarily selecting (S251b) a skeleton point in the skeleton line as a choice point;
selecting (S252b) a skeleton point farthest from the choice point in the skeleton line as a starting point of the processing path;
sorting (S253b) skeleton points based on a distance between each skeleton point in the skeleton line and the starting point; and
performing (S254b) linear fitting on the skeleton line based on a sorting result to obtain the processing path, so that the processing device is able to traverse all the skeleton points in the processing path in turn based on the sorting result of the skeleton points.

7. The method according to claim 5 or 6, wherein determining whether the skeleton line is able to form the closed graph comprises:
taking (S301) any skeleton point in the skeleton line as a test point;
taking (S302) a non-test point with a smallest distance from a target test point in the skeleton line as the test point until all the skeleton points in the skeleton line are test points, where the target test point is a newly determined test point;
obtaining (S303) a test distance between a first determined test point and a last determined test point; and
wherein if the test distance is less than a distance threshold, the skeleton line is able to form the closed graph, otherwise, the skeleton line is unable to form the closed graph.

8. The method according to claim 1, wherein collecting (S210) data of the workpiece to obtain a target workpiece point cloud comprises:
determining a certain number of measurement points on the workpiece;
obtaining coordinate information of each measurement point on the workpiece;
showing data points corresponding to the obtained coordinate information in an virtual space based on the coordinate information of each measurement point, to obtain the target workpiece point cloud.

9. The method according to claim 2, wherein collecting (S211) the data of the workpiece from a single viewing angle to obtain the workpiece point cloud comprises:
controlling, by a control device, the data collection device to always emit a line laser towards the workpiece in one direction, forming light on a surface of the workpiece, and
obtaining the coordinate information of the region covered by the light on the surface of the workpiece; and
controlling a robot to move along an axial direction of the workpiece, so that the light formed by the line laser traverses a surface of one side of the workpiece, and using a preset measurement method to obtain all the coordinate information of the surface of one side of the workpiece to form the workpiece point cloud.

10. The method according to claim 2, wherein collecting (S211) the data of the workpiece from a single viewing angle to obtain the workpiece point cloud comprises:
controlling, by a control device, a data collection device to emit a measurement pattern towards the workpiece in a set direction, wherein the measurement pattern covers all or part of a region on one side of the surface of the workpiece; and
obtaining data of the region covered by the measurement pattern on a surface of the workpiece based on a deformation of the measurement pattern to obtain the workpiece point cloud.

11. The method according to claim 2, wherein clustering and segmenting (S212) the workpiece point cloud to obtain multiple initial segmented point clouds comprises:
taking any data point not divided into a clustering cluster in the workpiece point cloud as a seed point, and forming a neighborhood of the seed point with a first set distance as a radius;
sorting all data points in the neighborhood of the seed point to a same clustering cluster, and continuing to select any data point in the clustering cluster as a new seed point to determine a neighborhood of the new seed point;
adding data points in the neighborhood of the new seed point to the clustering cluster to grow the clustering cluster until the clustering cluster cannot grow anymore;
taking a point cloud formed by all data points in the clustering cluster as the initial segmented point cloud, and then continuing to take any data point not divided into the clustering cluster in the workpiece point cloud as the seed point to determine the next clustering cluster until there are no data points not divided into the clustering cluster in the workpiece point cloud after determining the clustering cluster, thus completing the clustering segmentation of the workpiece point cloud.

12. The method according to claim 2, wherein combining (S215) the segmented point cloud with the workpiece point cloud to obtain the target workpiece point cloud comprises:
setting multiple alignment points on the workpiece;
determining a part of the workpiece corresponding to the segmented point cloud;
taking at least two alignment points on the part of the workpiece corresponding to the segmented point cloud as target alignment points,
determining a first mapping point corresponding to the target alignment point in the segmented point cloud, and determining a second mapping point corresponding to the target alignment point in the workpiece point cloud;
rotating and translating the segmented point cloud until the first mapping point and the second mapping point coincide to fuse the segmented point cloud with the workpiece point cloud;
fusing each segmented point cloud with the workpiece point cloud to obtain the target workpiece point cloud.

13. The method according to claim 2, wherein the curvature and normal vector of each data point in the target workpiece point cloud are determined by:
taking any data point in the target workpiece point cloud as a center and a second distance as a radius to determine a neighborhood of the data point;
based on coordinate information of the data point in the neighborhood of the data point, using a covariance matrix to calculate an eigenvalues of the neighborhood of the data point as an eigenvalues of the data point;
taking an eigenvector corresponding to a minimum eigenvalue of the data point as the normal vector of the data point, and taking a ratio of the minimum eigenvalue of the data point to a sum of all eigenvalues as the curvature of the data point.

14. A robot, comprising a memory, a processor and a readable program stored on the memory, wherein the processor executes the readable program to implement the method according to any one of claims 1 to 7.

15. A readable storage medium, wherein a readable program/instructions are stored thereon, and when the readable program/instructions are executed by a processor, the method according to any one of claims 1 to 7 is implemented.
